# EUROPÄISCHE PATENTSCHRIFT

(11) **EP 0 654 616 B1**
(45) Veröffentlichungstag und Bekanntmachung des Hinweises auf die Patenterteilung: **31.03.1999**
(21) Anmeldenummer: 94116958.3
(22) Anmeldetag: 27.10.1994
(51) Int. Cl.: F16D 69/02

(54) **Reibbelagmischung für Brems- und Kupplungsbeläge**
Mixture for friction lining for brakes and clutches
Mélange pour garnitures de friction pour freins et embrayages

(30) Priorität: 24.11.1993 DE 4340017
(43) Veröffentlichungstag der Anmeldung: 24.05.1995
(73) Patentinhaber: BBA Friction GmbH, 51375 Leverkusen (DE)
(72) Erfinder: Hell, Manfred, D-51515 Kürten (DE)
(74) Vertreter: Dallmeyer, Georg, Dipl.-Ing.

(56) Entgegenhaltungen:
- EP-A- 0 050 377
- EP-A- 0 244 099
- EP-A- 0 443 550
- EP-A- 0 579 180
- DE-A- 3 637 022
- DE-A- 4 018 671
- GB-A- 956 568

## Beschreibung

Die Erfindung betrifft eine Reibbelagmischung für Brems- und Kupplungsbeläge nach dem Oberbegriff des Anspruchs 1.

Derartige Reibbelagmischungen werden für Brems- und Kupplungsbeläge, z.B. für den Einsatz in Kraftfahrzeugen, benötigt.

Üblicher Reibbelagrezepturen haben grundsätzlich folgenden schematischen Aufbau:
- Metalle (als Faser oder Pulver),
- Füllstoffe (inkl. eventueller anorganischer Fasern),
- Gleitmittel (Festschmierstoffe),
- organische Bestandteile (Harze, Kautschuke, organische Fasern, organische Füllstoffe).

Je nach Anforderungsprofil sind die vier Rohstoffgruppen unterschiedlich proportioniert.

Wesentliche Ziele der Reibmaterialentwicklung ist die Optimierung des Reibwertes in Verbindung mit den Reibpartner des Reibbelags, die Verringerung des Verschleißes der Reibpartner und die Optimierung des thermischen Verhaltens der Reibpartner.

Die bei der Reibung zwischen den Reibpartnern verrichtete Arbeit wird im wesentlichen in Wärme umgewandelt. Bei sehr hohen Belastungen entstehen Spitzentemperaturen, die durchaus den Schmelzpunkt des reibenden Materials in sogenannten Mikrokontaktbereichen erreichen. Diese örtlichen Übertemperaturen können den Reibpartner des Reibbelages z.B. eine Bremsscheibe örtlich sehr unterschiedlich belasten.

Hinsichtlich des Verschleißes werden unterschiedliche Verschleißmechanismen unterschieden, nämlich Verschleiß durch Abrasion, Adhäsion, tribochemische Reaktion (oxidativer Verschleiß) und Ablation.

Der abrasive Verschleiß ist durch Schneid-, Furchungs- und Reißprozesse gekennzeichnet. Er hat dann einen hohen Anteil an Gesamtverschleiß, wenn die Oberfläche des härteren Reibungspartners rauh ist.

Adhäsiver Verschleiß entsteht beim Aufeinandergleiten zweier Reibpartner aufgrund adhäsiver Wechselwirkung in den Kontaktbereichen infolge einer Werkstoff-Scherung. Die sich ergebenden Spannungen können sich bis zur Scherfestigkeit der Reibpartner aufbauen, wobei bei Erreichen dieser Spannungen Werkstoff abgetrennt wird und somit der Verschleiß einsetzt. Beim adhäsiven Verschleiß von Polymer/Metall-Paarungen bildet sich zwischen den Reibpartnern in Abhängigkeit von Gleitgeschwindigkeit, Temperatur und Normalkraft eine Grenzschicht variabler Zusammensetzung, deren Eigenschaften den Verschleiß der Reibpaarung bestimmen.

Oxidativer Verschleiß tritt hauptsächlich an einer Bremsscheibe oder einer Bremstrommel bereits bei Temperaturen ab 180 °C auf. Positiv ist, daß das Entstehen von Oxidfilmen auf einer Bremsscheibe zur Verminderung des Scheibenverschleißes und oft auch über die Wechselwirkung der Reibpaarung zur Senkung des Belagverschleißes führt. Oxidfilme als Schmierfilme auf der Bremsscheibe gegen die Folgen des Adhäsivverschleißes können in ihrer Wirkung durch den Zusatz geeigneter Festschmierstoffe (z.B. Graphit) in ihrer Tragfähigkeit verbessert werden. Oberhalb von 400 °C auf der Bremsscheibe werden jedoch die meisten Schmierfilme zerstört. Es kommt zu adhäsiv bedingtem Materialauftrag. Um diesen bei manchen Betriebsbedingungen unvermeidlichen Auftrag zu entfernen, ist oft das oben erwähnte mild-abrasive Verschleißverhalten bei tieferen Temperaturen erwünscht.

Polymere oder polymer gebundene Körper unterliegen ferner im Temperaturbereich ihres thermischen Abbaus dem thermischen Verschleiß (Ablation). Dieser ablative Verschleiß ist bei Temperaturen ab 240 °C unvermeidlich. Die Höhe des ablativen Verschleißes kann über die Aktivierungsenergie der Bindemittelzersetzung und durch Verwendung von Reibbelagfüllstoffen, deren tribochemische Reaktionen endotherm sind, beeinflußt werden.

Zur Optimierung der Verschleißschutzeigenschaften ist es z.B. aus der DE 40 18 671 A1 oder DE 40 24 547 A1 bekannt, als Festschmierstoff Metallsulfide, insbesondere Antimontrisulfid, Molybdändisulfid, in Verbindung mit pulverförmigen oder körnigen Graphit zu verwenden. Diese Festschmierstoffe haben sich in Verbindung mit anorganischen Füllstoffen zur Verbesserung der Verschleißschutzeigenschaften bewährt. Da, wie zuvor ausgeführt, die Schmierfilme bei Temperaturen über 400 °C auf der Bremsscheibe zerstört werden, können gleichwohl bei hohen und ungleichmäßigen Temperaturbelastungen, abgesehen von dem erhöhten Verschleiß, Oberflächenrisse an der Oberfläche des Reibungspartners des Reibbelages entstehen.

Aus der DE-C-11 53 670 ist ein Verfahren zur Herstellung eines keramisch gebundenen Reibkörpers bekannt, bei dem Metallsulfidpulver als Schmiermittel vorgeschlagen werden. Dabei sind neben Molydän-, Antimon-, Blei-, Zink- und/oder Kadmiumsulfiden auch Zinnsulfide genannt.

Der Erfindung liegt die Aufgabe zugrunde, eine Reibbelagmischung bereitzustellen, die bei hohen Spitzentemperaturbelastungen eine verringerte Oberflächenrißanfälligkeit des Reibpartners zur Folge hat.

Zur Lösung dieser Aufgabe dienen die Merkmale des Anspruchs 1.

Die Verwendung von Zinnsulfiden, nämlich Zinnsulfid oder Zinndisulfid, als festes Schmiermittel führt neben einer bemerkenswerten Verbesserung des Verschleißes der Reibpartner gegenüber anderen bekannten Festschmiermitteln überraschenderweise zu einem erheblichen Rückgang der Rißanfälligkeit des reibungstechnischen Gegenstücks zum Reibbelag. Ein weiterer, aber nicht unwesentlicher Vorteil besteht darin, daß Zinnsulfide anstelle von potentiell gesundheitsgefährdenden Metallsulfiden, z.B. Antimontrisulfid oder Bleisulfid, verwendet werden können, so daß bei Verarbeitung und Herstellung von Reibbelägen die gesundheitlichen Gefährdungen des Produktionspersonals reduziert werden können.

Vorzugsweise ist vorgesehen, daß die Reibbelagmischung aus einem Anteil von 0 bis 70 Gew.-% Metallen, 3 bis 50 Gew.-% Füllstoffen, 10 bis 45 Gew.-% Schmierstoffen und 3 bis 25 Gew.-% organischen Zusatzstoffen, einschließlich Aramidfasern besteht.

In den Schmierstoffen sind Zinnsulfide mit einem Gewichtsanteil von 0,5 bis 10 Gew.-%, vorzugsweise zwischen 2 und 8 Gew.-%, enthalten. Dabei wird Zinnsulfid als alleiniges Metallsulfid in der Schmierstoffgruppe verwendet.

Weitere vorteilhafte Merkmale sind den Unteransprüchen zu entnehmen.

Im folgenden wird ein Ausführungsbeispiel der Erfindung unter Bezugnahme auf die Zeichnung näher erläutert.

Es zeigen:
- Fign. 1 und 2: Vergleichsuntersuchungen hinsichtlich der Rißanfälligkeit des Reibpartners bei Verwendung von Antimontrisulfid bzw. Zinnsulfid als festen Schmierstoff und
- Fig. 3: ein Vergleich des Verschleißes der Reibpartner bei Verwendung von Antimontrisulfid bzw. Zinnsulfid.

Die den Vergleichsuntersuchungen zugrundeliegende Reibbelagmischung setzt sich wie folgt zusammen:

| Rohstoffe | Gew.-% |
|---|---|
| Stahlwolle | 20,0 |
| Kupferpulver | 16,0 |
| Aluminiumoxid | 1,2 |
| Glimmermehl | 6,5 |
| Schwerspat | 9,5 |
| Eisenoxid | 10,0 |
| Metallsulfid | 6,0 |
| Graphit | 4,0 |
| Kokspulver | 16,0 |
| Aramidfaser | 1,4 |
| Harzfüllstoffpulver | 4,0 |
| Bindeharz | 5,4 |

Als fester Schmierstoff wird einerseits das bisher verwendete Antimontrisulfid und zum Vergleich anstelle von Antimontrisulfid Zinnsulfid eingesetzt.

Die Reibpartner werden auf einer Scheibenbremse für Nutzfahrzeuge in einem Schwungmassenprüfstand getestet, wobei in einem zeitlich definierten Abstand 50 Bremsungen mit einem Bremsmoment von ca. 8 kNm ausgeführt werden.

Nach jeweils 10 Bremsungen erfolgt eine Beurteilung der Oberflächenrisse auf der Bremsscheibe.

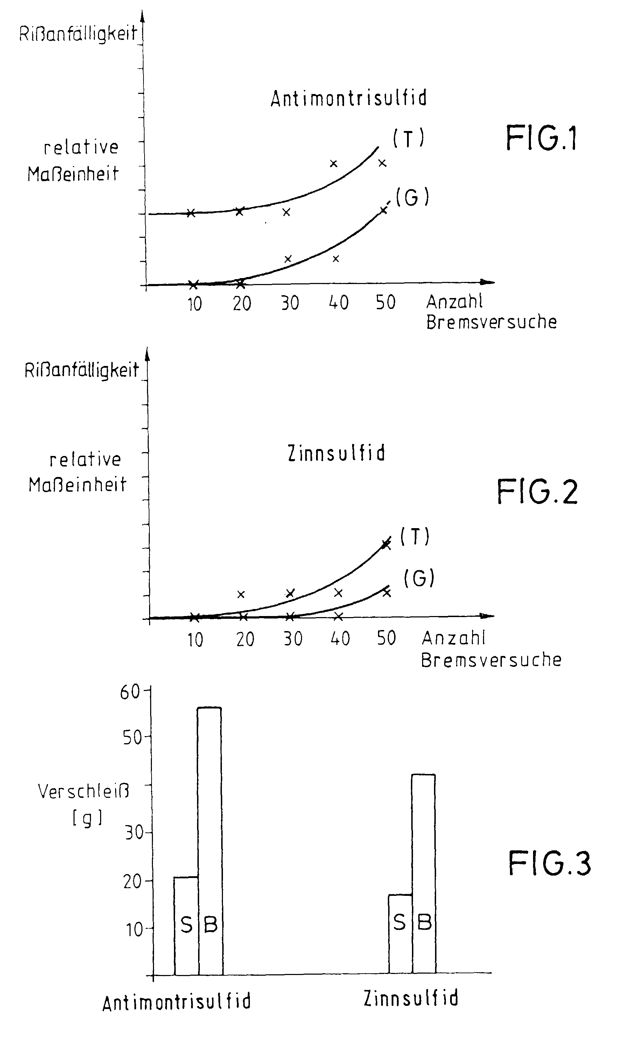

Fig. 1 zeigt ein Diagramm, in dem mit relativen Maßeinheiten die Rißanfälligkeit der Bremsscheibe bei Verwendung einer Reibbelagmischung mit Antimontrisulfid in Abhängigkeit von der Anzahl der Bremsversuche wiedergegeben ist.

Fig. 2 zeigt die Rißanfälligkeit der Bremsscheibe bei Verwendung einer Reibbelagmischung mit Zinnsulfid. Im Vergleich zu Fig. 1 ist offensichtlich, daß die Rißanfälligkeit erheblich reduziert ist, und zwar sowohl für die Topf seite T der Bremsscheibe als auch für die dem Fahrzeug zugewandte Gegenseite G.

Bei einem weiteren Versuch mit einem Bremsmoment von ca. 11 kNm und 20 Bremsungen ist der Verschleiß der Scheibe bzw. der Bremsbeläge gemessen worden.

Bei Verwendung von Zinnsulfid ergibt sich ein Verschleiß für die Bremsscheibe von 16,6 g und für die Bremsbeläge von 42,2 bzw. 42,6 g. Bei Verwendung von Antimontrisulfid betrug der Scheibenverschleiß 20,5 g und der Bremsbelagverschleiß 57,6 bzw. 56,6 g. Desweiteren ist die Anzahl der Oberflächenrisse bei Verwendung von Antimontrisulfid signifikant höher als bei Verwendung von Zinnsulfid.

Insgesamt läßt sich feststellen, daß außer der Verbesserung der Rißanfälligkeit der Scheibenverschleiß bei Verwendung von Antimontrisulfid um ca. 23,5 % und der Bremsbelagverschleiß um ca. 36 % höher ist als bei Verwendung von Zinnsulfid.

Die Verwendung von Zinnsulfiden (SnS, SnS₂) als Hochtemperatur-Schmierstoffe ist auch vorteilhaft bei der Verarbeitung und Herstellung von Bremsbelägen, da sie eine geringere Gesundheitsgefährdung darstellen als andere Metallsulfide, z.B. Antimontrisulfid oder Bleisulfid.

Die Zinnsulfide (SnS, SnS₂) können beispielsweise als Pulver der Reibbelagmischung beigefügt werden, wobei die Reibbelagmischung üblicherweise verpreßt werden kann.

Es hat sich herausgestellt, daß bei Verwendung von Zinnsulfiden als Schmierstoffe nicht nur eine Verbesserung des Verschleißwiderstandes erreicht werden kann, sondern auch daß Zinnsulfide überraschenderweise als Hochtemperatur-Schmierstoff einsetzbar sind, während andere bekannte Metallsulfid-Verbindungen ihre Schmierfunktion bei Temperaturen über 400 °C nicht mehr ausüben können. Abgesehen von der erzielbaren Verschleißreduzierung ist mit der Verwendung von Zinnsulfiden eine erhebliche Reduzierung der Rißanfälligkeit des reibungstechnischen Gegenstücks zum Reibbelag erzielbar. Dies ist voraussichtlich darauf zurückzuführen, daß bei hohen Temperaturen, insbesondere an den Stellen der örtlichen Temperaturspitzen in den sogenannten Mikrokontaktbereichen Zinn in die Stahloberfläche eindiffundieren kann und dort im Oberflächenbereich eine perlitische Struktur erzeugen kann. Dies führt in der Oberflächengrenzschicht zu einer höheren und gleichmäßigeren Härte, die der Rißbildung entgegenwirkt. Gleichzeitig wird auch der Verschleißwiderstand im Hochtemperaturbereich erhöht.

## Patentansprüche

1. Organisch gebundene Reibbelagmischung für mit einem Reibpartner aus Stahl zusammenwirkende Brems- und Kupplungsbeläge bestehend aus
- Aramidfasern,
- organischen und/oder anorganischen Füllstoffen,
- Schmierstoffen
- organischen Bindemitteln, und/oder
- Metallen oder Metallverbindungen
**dadurch gekennzeichnet,**
daß die Mischung zur Reduzierung der Rißanfälligkeit des Reibpartners Zinnsulfide (SnS, SnS₂) enthält, wobei die Zinnsulfide mit einem Gewichtsanteil von 0,5 bis 10 Gew.-%, vorzugsweise 2 bis 8 Gew.-%, enthalten sind.

2. Reibbelagmischung nach Anspruch 1, dadurch gekennzeichnet, daß der Anteil
- an Metallen 0 bis 70 Gew.-%,
- an Füllstoffen 3 bis 50 Gew.-%,
- an Schmierstoffen 10 bis 45 Gew.-% und
- an organischen Zusatzstoffen 3 bis 25 Gew.-%
beträgt.

3. Reibbelagmischung nach Anspruch 1 oder 2, dadurch gekennzeichnet, daß als Metall Stahlwolle und/oder Kupferwolle enthalten ist.

4. Reibbelagmischung nach einem der Ansprüche 1 bis 3, dadurch gekennzeichnet, daß als Füllstoffe einzeln oder in Kombination mit anderen Füllstoffen Metalloxide, Metallsilikate, und/oder Metallsulfate enthalten sind.

5. Reibbelagmischung nach einem der Ansprüche 1 bis 4, dadurch gekennzeichnet, daß als Schmierstoffe einzeln oder in Kombination mit anderen Schmierstoffen außer den Zinnsulfiden (SnS, Sn₂) Graphit und/oder Kokospulver enthalten ist.

6. Reibbelagmischung nach einem der Ansprüche 1 bis 5, dadurch gekennzeichnet, daß als organische Zusatzstoffe neben den Aramidfasern einzeln oder in Kombination Harzfüllstoffpulver und/oder Bindeharze enthalten sind.

7. Reibbelagmischung nach einem der Ansprüche 1 bis 6, dadurch gekennzeichnet, daß
- Metalle mit einem Anteil von 30 bis 40 Gew.-%,
- Füllstoffe mit einem Anteil von 20 bis 35 Gew.-%,
- feste Schmierstoffe mit einem Anteil von 20 bis 30 Gew.-% sowie
- organische Anteile mit einem Anteil von 5 bis 15 Gew.-%
enthalten sind.

8. Reibbelagmischung nach Anspruch 7, dadurch gekennzeichnet, daß
- Stahlwolle mit einem Anteil von 15 bis 25 Gew.-% und Kupferwolle oder Kupferpulver mit einem Anteil von 10 bis 20 Gew.-%,
- Aluminiumoxid mit einem Anteil von 0,5 bis 2 Gew.-%,
- Glimmermehl mit einem Anteil von 5 bis 8 Gew.%,
- Schwerspat mit einem Anteil von 5 bis 15 Gew.-%
- Eisenoxid mit einem Anteil von 5 bis 15 Gew.-%,
- Zinnsulfide mit einem Anteil von 2 bis 8 Gew.-%,
- Graphit mit einem Anteil von 2 bis 6 Gew.-%,
- Kokospulver mit einem Anteil von 10 bis 20 Gew.-%,
- Aramidfasern mit einem Anteil von 1 bis 2 Gew.%,
- Harzfüllstoffpulver mit einem Anteil von 2 bis 6 Gew.-% und
- Bindeharz mit einem Anteil von 3 bis 7 Gew.-%
enhalten ist.

## Claims

1. An organically bound mixture for friction linings for brake and clutch linings cooperating with a friction partner of steel, comprising
- aramide fibers,
- organic and/or inorganic fillers,
- lubricants,
- organic binders, and/or
- metals or metal compounds,
characterized in
that the mixture includes tin sulfides (SnS, SnS₂) to reduce the susceptibility to rupture of the friction partner, the tin sulfides being present in 0.5 to 10 percent by weight, preferably 2 to 8 percent by weight.

2. The mixture for friction linings of claim 1, characterized in that the percentage
- of metals is 0 to 70 percent by weight,
- of fillers is 3 to 50 percent by weight,
- of lubricants is 10 to 45 percent by weight, and
- of organic additives is 3 to 25 percent by weight.

3. The mixture for friction linings, characterized in that the metal contained is steel wool and/or copper wool.

4. The mixture for friction linings according to one of claims 1 to 3, characterized in that the fillers contained are, either individually or in combination with other fillers, metal oxides, metal silicates, and/or metal sulfates.

5. The mixture for friction linings according to one of claims 1 to 4, characterized in that the lubricants contained are, either individually or in combination with other lubricants, are graphite and/or coco powder, besides the tin sulfides (SnS, SnS₂).

6. The mixture for friction linings according to one of claims 1 to 5, characterized in that the organic additives contained are, either individually or in combination, resin filler powders and/or binding resins.

7. The mixture for friction linings according to one of claims 1 to 6, characterized in that
- 30 to 40 percent by weight are metals,
- 20 to 35 percent by weight are fillers,
- 20 to 30 percent by weight are solid lubricants, and
- 5 to 15 percent by weight are organic parts.

8. The mixture for friction linings according to claim 7, characterized in that
- steel wool is present in a percentage of 15 to 25 percent by weight and copper wool or copper powder is present in a percentage of 10 to 20 percent by weight,
- aluminum oxide is present in a percentage of 0.5 to 2 percent by weight,
- mica powder is present in a percentage of 5 to 8 percent by weight,
- barite is present in a percentage of 5 to 15 percent by weight,
- iron oxide is present in a percentage of 5 to 15 percent by weight,
- tin sulfides are present in a percentage of 2 to 8 percent by weight,
- graphite is present in a percentage of 2 to 6 percent by weight,
- coco powder is present in a percentage of 10 to 20 percent by weight,
- aramide fibers are present in a percentage of 1 to 2 percent by weight,
- resin filler powder is present in a percentage of 2 to 6 percent by weight, and
- binding resin is present in a percentage of 3 to 7 percent by weight.

## Revendications

1. Mélange de garniture de friction aggloméré par matière organique, pour garnitures de frein et d'embrayage coopérant avec un élément de friction associé en acier, se composant :
- de fibres d'aramide,
- de charges organiques et/ou minérales,
- de matières lubrifiantes,
- de liants organiques, et/ou
- de métaux ou de composés métalliques
caractérisé par le fait que le mélange contient des sulfures d'étain (SnS, SnS2) pour réduire la tendance à se déchirer de l'élément de friction associé, les sulfures d'étain étant présents selon un pourcentage en poids de 0,5 à 10 % en poids, de préférence 2 à 8 % en poids.

2. Mélange de garniture de friction selon la revendication 1, caractérisé par le fait que la pourcentage s'élève à :
- 0 à 70 % en poids pour les métaux,
- 3 à 50 % en poids pour les charges,
- 10 à 45 % en poids pour les matières lubrifiantes et
- 3 à 25 % en poids pour les additifs organiques.

3. Mélange de garniture de friction selon la revendication 1 ou 2, caractérisé par le fait qu'il contient, comme métal, de la paille de fer et/ou de la laine de cuivre.

4. Mélange de garniture de friction selon l'une des revendications 1 à 3, caractérisé par le fait qu'il contient, comme charges, des oxydes métalliques, des silicates de métaux et/ou des sulfates métalliques seuls ou en combinaison avec d'autres charges.

5. Mélange de garniture de friction selon l'une des revendications 1 à 4, caractérisé par le fait qu'il contient, comme matières lubrifiantes, outre des sulfures d'étain (SnS, SnS₂), du graphite et/ou de la poudre de coco, seuls ou en combinaison avec d'autres matières lubrifiantes.

6. Mélange de garniture de friction selon l'une des revendications 1 à 5, caractérisé par le fait qu'il contient, comme additifs organiques, en plus des fibres d'aramide, de la poudre de remplissage de résine et/ou des résines liantes, seules ou en combinaison.

7. Mélange de garniture de friction selon l'une des revendications 1 à 6, caractérisé par le fait qu'il contient :
- des métaux selon un pourcentage de 30 à 40 % en poids,
- des charges selon un pourcentage de 20 à 35 % en poids,
- des matières lubrifiantes solides selon un pourcentage de 20 à 30 % en poids ainsi que
- des portions organiques selon un pourcentage de 5 à 15 % en poids.

8. Mélange de garniture de friction selon la revendication 7, caractérisé par le fait qu'il contient :
- de la paille de fer selon un pourcentage de 15 à 25 % en poids et de la laine de cuivre ou de la poudre de cuivre selon un pourcentage de 10 à 20 % en poids,
- de l'oxyde d'aluminium selon un pourcentage de 0,5 à 2 % en poids,
- des fines de mica selon un pourcentage de 5 à 8 % en poids,
- du spath pesant selon un pourcentage de 5 à 15 % en poids,
- de l'oxyde de fer selon un pourcentage de 5 à 15 % en poids,
- des sulfures d'étain selon un pourcentage de 2 à 8 % en poids,
- du graphite selon un pourcentage de 2 à 6 % en poids,
- de la poudre de coco selon un pourcentage de 10 à 20 % en poids,
- des fibres d'aramide selon un pourcentage de 1 à 2 % en poids,
- de la poudre de remplissage de résine selon un pourcentage de 2 à 6 % en poids et
- de la résine liante selon un pourcentage de 3 à 7 % en poids.
